# FASCICULE DE BREVET EUROPEEN

(11) **EP 0 820 689 B1**
(45) Date de publication et mention de la délivrance du brevet: **21.02.2001**
(21) Numéro de dépôt: 97460026.4
(22) Date de dépôt: 16.07.1997
(51) Int. Cl.: A01C 17/00

(54) **Dispositif d'épandage centrifuge d'engrais ou de produits similaires en grains**
Schleuderstreuer für Dünger oder ähnliches Gut
Broadcaster for fertiliser or similar produce in grain

(30) Priorité: 26.07.1996 FR 9609693
(43) Date de publication de la demande: 28.01.1998
(73) Titulaire: SULKY-BUREL S.A., F-35220 Chateaubourg (FR)
(72) Inventeur: Clochard, Daniel, 35113 Domagne (FR)
(74) Mandataire: Le Faou, Daniel

(56) Documents cités:
- EP-A- 0 384 132
- EP-A- 0 410 095
- DE-A- 3 812 087
- FR-A- 2 700 660

## Description

La présente invention concerne un dispositif d'épandage centrifuge d'engrais ou de produits similaires en grains.

Plus précisément, ce dispositif est du type, bien connu, comprenant un disque rotatif d'axe vertical portant au moins deux pales éjectrices, dites standard, servant à l'épandage normal.

Ce genre de dispositif est monté à la sortie d'une trémie recevant l'engrais, qui est portée par un tracteur.

Un orifice de distribution, généralement équipé d'une trappe de dosage, assure l'écoulement de l'engrais sur le disque.

Certains matériels sont équipés de deux disques disposés côte à côte et tournant en sens contraires.

Lors de l'épandage de produits en grains, notamment d'engrais, dans un champ, se pose le problème de l'épandage en bordure de ce champ.

Par le terme "bordure", on entend aussi bien un élément matériel tel qu'une haie, un fossé ou une barrière, qui borde l'un des côtés du champ, que la limite d'une parcelle voisine.

La disposition et l'orientation des pales équipant le ou les disques distributeurs sont déterminés de telle manière que la densité des grains distribués au cours d'un passage du dispositif soit quasiment constante sur la majeure partie de la bande couverte par le passage.

En pratique, le spectre d'épandage comporte des zones d'extrémité sur lesquels la densité décroît à peu près linéairement vers l'extérieur.

Cependant, cette zone de densité non homogène est compensée par l'apport de grains du passage suivant, les deux extrémités des spectres se superposant pour donner une résultante à peu près constante.

Il se pose cependant le problème de l'épandage d'une zone de bordure du champ, où les constructeurs essaient d'obtenir une cassure du spectre, faisant que la distribution est à peu près homogène jusqu'à la limite du champ, et décroît brutalement de manière à limiter l'épandage au-delà de la limite.

Pour ce faire, différentes solutions ont été proposées.

L'une d'elles consiste à remplacer le disque épandeur standard par un disque spécial servant à l'épandage de bordure, ce disque ayant des pales de forme, longueur et/ou orientation différentes de celles du disque standard.

Toutefois, cette solution est relativement fastidieuse, puisqu'elle oblige à substituer un disque à un autre, ce qui implique des opérations de montage/démontage des disques.

Une autre solution, qui fait l'objet notamment du document FR-A-2 669 806, est de doter la sortie de la trémie d'un volet déflecteur mobile, apte à intercepter et à dévier une partie du flux de produit s'écoulant de la trémie vers le disque épandeur, pour la diriger vers le reste du flux.

Si cette solution donne généralement satisfaction, elle présente l'inconvénient de ne pouvoir s'adapter facilement à tous les types de distributeurs d'engrais disponibles dans le commerce.

Il a été également proposé de munir la zone d'extrémité aval de la pale éjectrice d'une partie mobile, orientable et/ou coulissante.

En modifiant la position de cette partie d'extrémité par rapport à la pale éjectrice, il est possible de modifier, dans une certaine mesure, la zone d'extrémité du spectre.

Des systèmes de ce genre sont prévus par exemple dans les documents FR-A- 2 450 551 (voir figures 12 et 13), EP-A- 0 017 128, EP-A-0 158 335, et DE-U-7 836 640.

Cependant, le réglage de position de la partie mobile de la pale est souvent délicat, et source d'erreurs pour l'utilisateur.

L'objectif de l'invention est de proposer un dispositif simple, peu coûteux, et facile d'utilisation, qui permette de casser de manière nette l'extrémité du spectre d'épandage, afin de procéder à l'épandage d'une zone de bordure.

Un autre objectif de l'invention est de proposer un système qui puisse s'adapter facilement sur un disque du commerce, même si celui-ci n'a pas été initialement conçu pour le recevoir.

De manière connue, le dispositif qui fait l'objet de l'invention comprend un disque rotatif, d'axe vertical portant au moins deux pales éjectrices, dites standard, servant à l'épandage normal, et au moins une pale dite auxiliaire, associée à l'une desdites pales standard et servant à l'épandage de bordure.

Ce dispositif est remarquable par le fait que ladite pale auxiliaire est amovible ou escamotable et possède une longueur plus courte que la pale standard à laquelle elle est associée, cette pale auxiliaire étant positionnable devant cette dernière (devant la pale standard à laquelle elle est associée) de telle manière qu'elle intercepte la totalité du flux de produits qui sont déversés devant elle sur le disque, et les projette à l'extérieur de celui-ci tout en empêchant qu'ils n'atteignent la pale standard associée.

Ainsi, en cours d'utilisation pour l'épandage de bordure, la pale standard est en quelque sorte rendue inactive, n'étant pas soumise à l'impact des grains.

On comprend aisément qu'il est facile de doter un disque déjà existant d'un tel dispositif. Il suffit pour cela de prévoir une pale auxiliaire ainsi dimensionnée et conformée qu'on puisse la fixer facilement devant la pale standard.

Il va de soi que le terme "devant" est fait en référence au sens d'avancement d'un point du disque.

On signalera également comme éléments de l'état de la technique en la matière les documents DE-A-4 340 185, EP-A-0 184 132 et FR-A-2 700 660.

Dans le système du DE-A-4 340 185, il est prévu en amont de la pale standard une pale plus courte dont la fonction est de pré-accélérer les grains lorsqu'ils tombent sur le disque ; ensuite, ces grains sont repris, guidés et éjectés par la pale standard.

Les pales du système décrit dans le EP-A-0 384 132 sont des pales doubles, formées de deux parties accolées, décalées suivant la direction circonférentielle, ce qui a pour effet, semble-t-il, d'assurer une meilleure répartition du spectre d'épandage.

Dans le dispositif du FR-A-2 700 660, des pales d'épandage de bordure, montées à demeure sur le disque, sont adaptées pour servir à la fixation des pales standard - ou normales -.

Ce dispositif connu utilise donc en permanence des pales de bordure, et seulement occasionnellement les pales standard.

En aucun cas la pale de bordure n'est adaptée pour intercepter le flux et l'empêcher d'atteindre la pale standard, puisqu'elle est montée derrière cette dernière.

Par ailleurs, selon un certain nombre de caractéristiques additionnelles possibles, mais non limitatives, de la présente invention :
- la pale auxiliaire possède une partie supérieure formant couvercle, apte à empêcher la chute du produit entre la pale auxiliaire et la pale standard associée ;
- à chacune des pales standard est associée une pale auxiliaire ;
- le disque est équipé d'une paire de pales standard d'inégales longueurs, et d'une seule pale auxiliaire, celle-ci étant associée à la pale standard la plus longue ;
- la pale standard la plus courte est orientable ;
- le dispositif comprend un jeu de pales auxiliaires amovibles, de longueurs différentes, utilisables sélectivement.

D'autres caractéristiques et avantages de l'invention apparaîtront de la description et des dessins annexés qui en représentent, à titre d'exemples non limitatif, des modes de réalisation préférés.

Sur ces dessins :
- la figure 1 est une vue schématique en perspective, qui montre un mode de réalisation possible d'un disque destiné à équiper un dispositif conforme à l'invention ;
- la figure 2 est une vue en perspective d'un mode de réalisation de la pale auxiliaire ;
- les figures 3 et 4 sont des vues de dessus schématique d'un disque respectivement non équipé et équipé d'une pale auxiliaire ;
- les figures 5 et 6 sont des demi-vues de dessus d'un disque équipé d'une pale auxiliaire escamotable par pivotement, celle-ci étant respectivement en position escamotée et en position active ;
- la figure 7 est une vue schématique de dessus d'un autre mode de réalisation, ayant une paire de pales standard équipées chacune d'une pale auxiliaire.

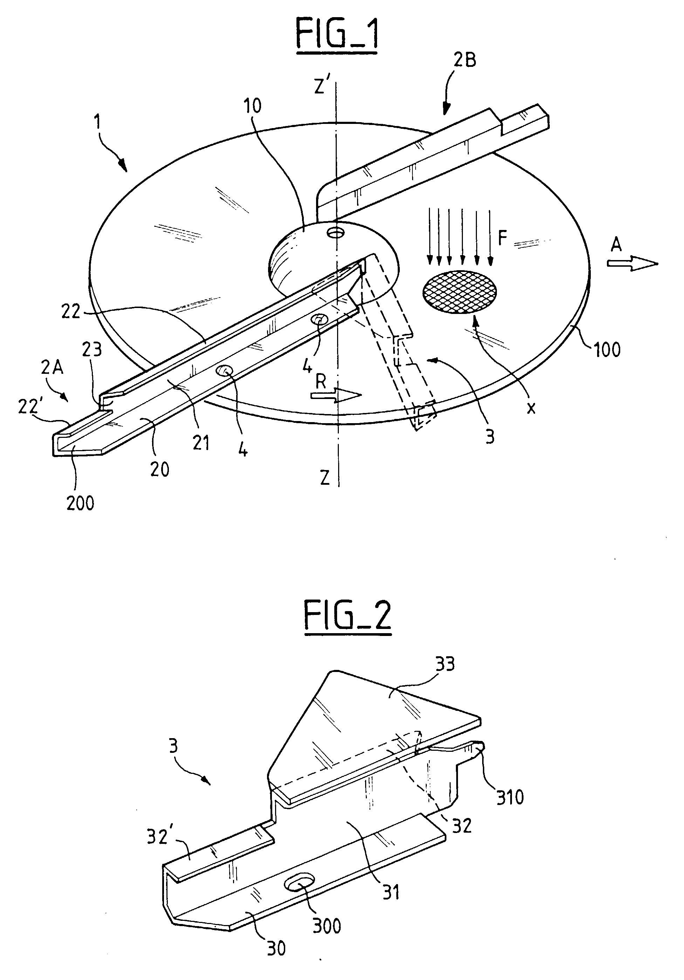

Le disque 1 de la figure 1 est de type général connu. Il possède une partie centrale 10 en forme de dôme, et est entraînée en rotation autour d'un axe vertical **ZZ'**, le sens de rotation étant symbolisé par la flèche **R**.

Le sens d'avancement de la machine sur le sol est symbolisé par la flèche **A**.

La zone de bordure est située sur la droite du disque, si on considère le sens d'avancement **A**.

La face supérieure du disque 1, entre le dôme 10, et le bord périphérique 100 est légèrement tronconique, d'angle au sommet très évasé (voisin de l'angle plat), de sorte que les grains quittent le disque avec une trajectoire ayant une faible composante horizontale dirigée vers le haut.

Ce disque est pourvu de deux pales, dites standard, 2A, 2B, qui sont fixées sur le dessus du disque. Comme cela est bien connu, les deux pales sont disposées à l'opposé l'une de l'autre sur le disque ; leur direction est approximativement tangentielle par rapport au bord circulaire de la partie 10 en forme de dôme.

L'une des pales, en l'occurrence la pale 2A, est plus longue que l'autre.

De manière bien connue, chacune des pales est un profilé métallique ayant une section en forme de "U" dont les branches latérales sont sensiblement horizontales, et dont l'ouverture est tournée vers l'avant (en considération du sens de rotation **R**).

On a désigné par les références 20 et 22, les ailes inférieure et supérieure du profilé, et par la référence 21 sa paroi arrière, sensiblement verticale.

Comme on le voit sur la figure 1, et comme cela est également bien connu, l'extrémité extérieure de l'aile supérieure 22, référencée 22' est décrochée vers le bas, de sorte qu'il y a deux zones de sortie, référencées 200 et 23, situées à des hauteurs différentes, pour l'éjection des grains.

A titre indicatif, dans un mode de réalisation possible, le disque a un diamètre de 400 mm, la pale 2A a une longueur de 365 mm et la pale 2B une longueur de 270 mm.

La pale 2A est fixée à demeure sur le disque au moyen de rivets ou de boulons, référencés 4, qui traversent l'aile 20.

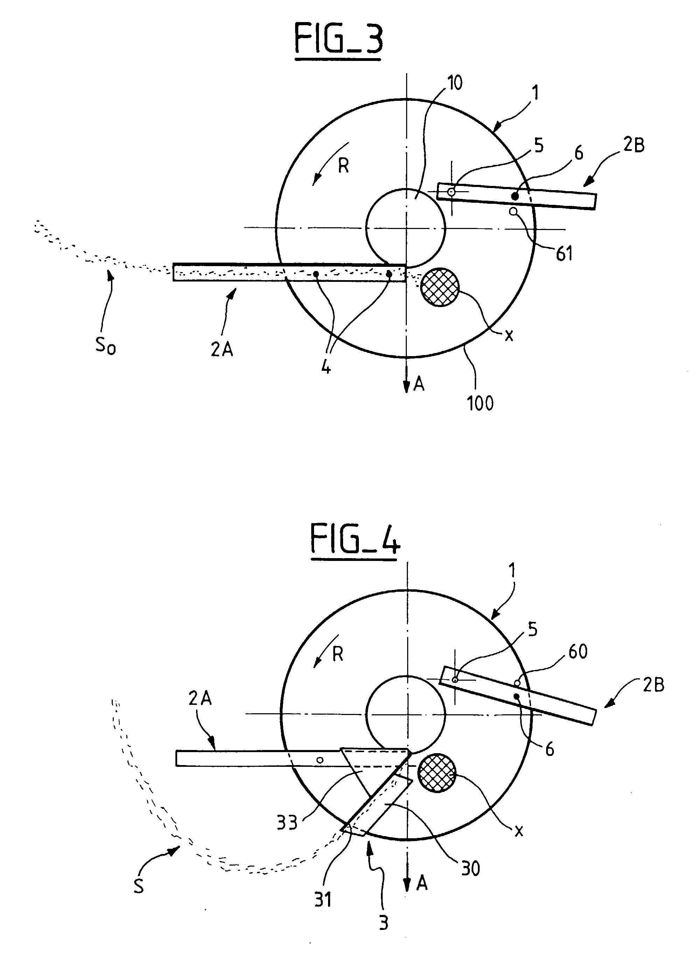

La pale 2B est également fixée à demeure sur le disque, mais de préférence - comme on le verra plus loin en référence aux figures 3 et 4 - cette pale est orientable.

Conformément à l'invention, le dispositif comporte une pale auxiliaire référencée 3, illustrée à la figure 2, et représentée en traits interrompus sur la figure 1.

Il s'agit d'une pale amovible, susceptible d'être positionnée sur le disque, en avant de la pale 2A.

La pale auxiliaire 3 a la même configuration générale que les pales standard, mais une longueur nettement plus petite. A titre indicatif cette longueur est de l'ordre de 140 mm. On a désigné par la référence 30 l'aile inférieure, par la référence 31 la paroi verticale et par les références 32 et 32' les ailes supérieures étagées de la pale 3.

Selon une caractéristique de l'invention une pièce en tôle 33, de forme générale triangulaire, est fixée sur l'aile supérieure 32.

Elle joue le rôle d'un couvercle, destiné à empêcher la chute des grains en arrière de la pale auxiliaire 3 et en avant de la pale principale associée 2A.

La pale auxiliaire illustrée à la figure 2 est amovible. Elle est fixée de manière facilement démontable, par des moyens de type connu, sur le disque 1.

Ces moyens peuvent consister par exemple, d'une part en un appendice (patte en saillie) 310 découpé dans la zone d'extrémité interne de la cloison 31, et susceptible de s'engager dans une lumière (non représentée) ménagée dans l'extrémité correspondante de la paroi 21 de la pale principale, d'autre part par un boulon (non représenté) traversant une ouverture 300 percée dans l'aile 30, et pénétrant dans un trou formé dans le disque.

Divers autres modes de fixation à démontage facile, à la portée de l'homme du métier, peuvent bien entendu être prévus.

On a désigné par la référence **x** la zone du disque vers laquelle tombe le flux **F** d'engrais ou produits similaires, qui sort de la trémie (non représentée).

Le fonctionnement du dispositif va maintenant être décrit, en référence aux figures 3 et 4.

La figure 3 correspond à un épandage normal en milieu de champ, la pale auxiliaire n'étant pas présente sur le disque.

L'épandage se fait alors de manière classique. Lorsque le flux d'engrais tombe au-dessus de la zone **x**, il est intercepté successivement par chacune des pales 2A et 2B afin d'être éjecté vers l'extérieur, et épandu au sol.

La référence **S**_{**0**} désigne le jet de grains quittant la pale 2A, ce jet ayant une configuration approximativement en spirale.

Sur le schéma de la figure 4, la pale auxiliaire 3 est montée sur le disque, en avant de la pale principale 2A.

C'est donc la pale auxiliaire qui va intercepter et canaliser le flux de grains.

Ceux-ci sont distribués selon une trajectoire **S** également en spirale, mais de plus faible rayon de courbure que **S**_{**0**}, du fait que la pale 3 est plus courte que la pale 2A. Les grains sont donc soumis à une accélération plus faible que sur la pale 2A, et l'épandage se fait sur une largeur limitée sur la droite du disque.

L'inclinaison et l'emplacement de la pale auxiliaire 3 sont choisis de telle manière que la trajectoire **S** n'interfère pas avec celle de la pale standard 2A. Celle-ci n'est absolument pas exposée à l'impact du flux de grains.

La présence de la paroi 33 formant couvercle obstrue l'espace situé derrière la partie intérieure de la pale 3 qui risquerait d'être exposée au flux de produit. A défaut certains grains risqueraient de tomber derrière la pale 3, mais devant la pale 2A, et seraient distribués par celle-ci.

A la comparaison des figures 3 et 4 on notera également la modification d'orientation de la pale standard courte 2B.

Celle-ci est articulée sur le disque à son extrémité amont (intérieur du disque) autour d'un axe 5. Dans sa partie médiane elle est fixée dans la zone de bordure du disque au moyen d'un boulon ou d'un doigt à ressort 6 qui peut être engagé sélectivement dans l'un des deux trous ou cuvettes 60, 61 formés dans le disque, et décalés suivant la direction circonférentielle du disque.

Pour l'épandage normal (figure 3) c'est le trou avant 60 qui est utilisé, tandis que pour l'épandage de bordure (figure 4) c'est le trou arrière 61 qui est utilisé.

Cette orientation différente de la pale 2B a pour effet de libérer les grains vers l'arrière lors de l'épandage de bordure, ce qui améliore l'homogénéité de la répartition globale des grains.

On remarquera que pendant la plus grande partie du travail (épandage normal), le disque est équipé des pales standard uniquement. Il est donc léger, et peut travailler dans des conditions optimales, notamment sur le plan de son équilibre dynamique. C'est seulement pour le travail de bordure, relativement rare, qu'il est alourdi par une pièce rajoutée.

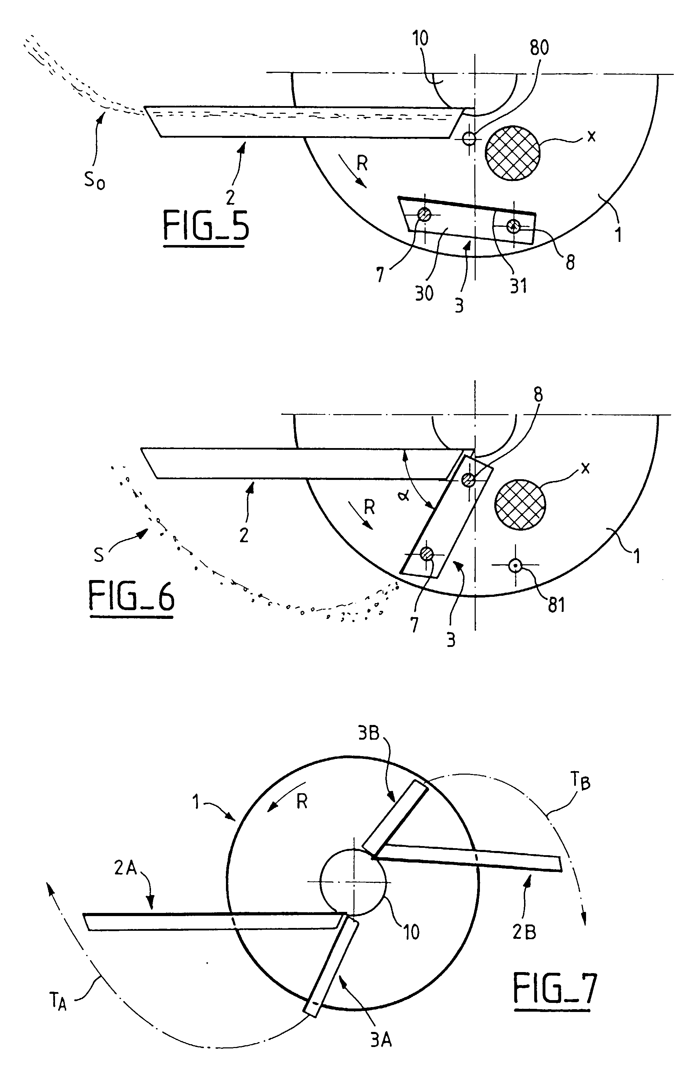

Sur les schémas des figures 5 et 6 on a affaire à une pale auxiliaire 3 qui reste à demeure sur le disque, même pour l'épandage normal.

Il s'agit d'une pale escamotable, pouvant être placée dans une position inactive (figure 5) pour l'épandage normal, ou au contraire dans une position active (figure 7) pour l'épandage de bordure.

Dans le mode de réalisation illustré, la pale auxiliaire 3 est articulée autour d'un axe 7 au niveau de son extrémité aval (près du bord du disque).

Il est fixé au disque au niveau de son extrémité amont au moyen d'un boulon, ou d'un téton à ressort 8, apte à s'engager sélectivement dans l'un ou l'autre de deux trous (ou cuvettes) 80, 81.

Le trou 80 est disposé à proximité de la zone d'entrée de la pale standard 2. Le trou 81 est situé au voisinage du bord du disque.

Les deux trous 80, 81 sont équidistants de l'axe 7.

Lorsqu'on utilise le trou 81, la pale auxiliaire 3 se trouve placée sur la zone de bordure du disque, suivant une direction approximativement parallèle à celle de la pale 2.

Dans cette position elle ne joue aucun rôle, et l'intégralité du flux de grains tombant dans la zone **x** est évacuée et guidée par la pale standard 2.

Au contraire, dans la position active (figure 7), pour laquelle le trou 80 est utilisé pour la fixation de la pale auxiliaire 3, c'est cette dernière qui intercepte le flux dans sa totalité.

A titre indicatif, l'angle α que forme entre elles les parois arrières des deux pales 3 et 2 a une valeur de 60°.

La figure 7 illustre une réalisation possible du dispositif de l'invention, dans lequel le disque est équipé d'une paire de pales 2A et 2B à chacune desquelles est associée une pale auxiliaire 3A, respectivement 3B. Ces pales auxiliaires sont amovibles et/ou escamotables.

On a désigné par les références **TA** et **TB** les trajectoires spirales des jets de grains qui quittent les pales auxiliaires 3A et 3B respectivement.

Bien entendu, la longueur de chacune des pales auxiliaires 3 est adaptée à celle de la pale standard associée, de telle sorte que cette trajectoire n'interfère pas avec ladite pale standard.

Bien que sur les dessins schématiques des figures 5, 6 et 7, les pales auxiliaires aient été représentées sans paroi-couvercle 33, il va de soi qu'elles en sont avantageusement équipées, comme celle du premier mode de réalisation (figures 1, 2, 4).

Il est possible de prévoir un jeux de différentes pales auxiliaires pour équiper ce genre de disques, par exemple trois pales auxiliaires ayant des longueurs de 140, de 170 et de 220 mm.

L'une de ces pales sera sélectivement utilisée en fonction de la largeur d'épandage de bordure souhaitée.

On notera que pour passer d'un épandage "plein champ" à un épandage de bordure, et inversement, les opérations requises, à savoir la mise en place/enlèvement ou le changement de position (position active/escamotage) de la - ou des pales - auxiliaire(s) sont d'une grande simplicité, les risques d'erreur étant pratiquement impossibles.

## Revendications

1. Dispositif d'épandage centrifuge d'engrais ou de produits similaires en grains, qui comprend un disque rotatif (1), d'axe vertical (ZZ'), portant au moins deux pales éjectrices (2A, 2B), dites standard, servant à l'épandage normal, et au moins une pale (3), dite auxiliaire, associée à l'une (2A) desdites pales standard et servant à l'épandage de bordure, caractérisé par le fait que ladite pale auxiliaire (3) est amovible ou escamotable et possède une longueur plus courte que la pale standard (2A) à laquelle elle est associée, cette pale auxiliaire (3) étant positionnable devant cette dernière de telle manière qu'elle intercepte la totalité du flux (F) de produits qui sont déversés devant elle sur le disque (1), et les projette à l'extérieur de celui-ci, tout en empêchant qu'ils n'atteignent la pale standard associée (2A).

2. Dispositif selon la revendication 1, caractérisé par le fait que ladite pale auxiliaire (3) possède une partie supérieure (33) formant couvercle, apte à empêcher la chute du produit entre la pale auxiliaire (3) et la pale standard associée (2A).

3. Dispositif selon la revendication 1 ou 2, caractérisé par le fait qu'à chacune des pales standard est associée une pale auxiliaire (3).

4. Dispositif selon la revendication 1 ou 2, caractérisé par le fait que le disque (1) est équipé d'une paire de pales standard (2A, 2B) d'inégales longueurs, et d'une seule pale auxiliaire (3), celle-ci étant associée à la pale standard la plus longue (2A).

5. Dispositif selon la revendication 4, caractérisé par le fait que la pale standard la plus courte (2B) est orientable.

6. Dispositif selon l'une des revendications 1 à 5, caractérisé par le fait qu'il comprend un jeu de pales auxiliaires amovibles, de longueurs différentes, utilisables sélectivement.

## Patentansprüche

1. Schleuderstreuvorrichtung für Dünger oder ähnliche körnige Produkte, welcher eine Drehscheibe (1) mit vertikaler Achse (ZZ') aufweist, welche wenigstens zwei sogenannte Standard-Auswurfflügel (2A, 2B), die dem normalen Auswurf dienen, und wenigstens einen sogenannten Hilfsflügel (3) trägt, welcher mit dem einen (2A) der Standardflügel verbunden ist und dem Randauswurf dient, dadurch gekennzeichnet, daß der Hilfsflügel (3) abnehmbar oder einziehbar ist und eine kürzere Lange aufweist als der Standardflügel (2A), mit welchem er verbunden ist, wobei der Hilfsflügel (3) vor diesem letzteren derart positionierbar ist, daß er den Gesamtfluß (F) der Produkte, die vor ihn auf der Scheibe (1) ausgestreut werden, abfängt und sie nach außen von dieser hinausschleudert, wobei verhindert wird, daß sie den verbundenen Standardflügel (2A) berühren.

2. Vorrichtung gemäß Anspruch 1, dadurch gekennzeichnet, daß der Hilfsflügel (3) einen oberen Bereich (33) aufweist, der einen Deckel bildet, welcher in der Lage ist zu verhindern, daß das Produkt zwischen den Hilfsflügel (3) und den verbundenen Standardflügel (2A) fällt.

3. Vorrichtung gemäß Anspruch 1 oder 2, dadurch gekennzeichnet, daß mit jedem der Standardflügel ein Hilfsflügel (3) verbunden ist.

4. Vorrichtung gemäß Anspruch 1 oder 2, dadurch gekennzeichnet, daß die Scheibe (1) mit einem Paar Standardflügel (2A, 2B) mit ungleichen Längen und einem einzigen Hilfsflügel (3) ausgestattet ist, wobei dieser mit dem längsten Standardflügel (2A) verbunden ist.

5. Vorrichtung gemäß Anspruch 4, dadurch gekennzeichnet, daß der kürzeste Standardflügel (2B) schwenkbar ist.

6. Vorrichtung gemäß einem der Ansprüche 1 bis 5, dadurch gekennzeichnet, daß sie einen Satz abnehmbarer Hilfsflügel mit unterschiedlichen Längen aufweist, welche selektiv benutzt werden können.

## Claims

1. A centrifugal spreader device for fertilizer or similar granular substances, the device comprising a rotary disk (1) having a vertical axis (ZZ') and carrying at least two "standard" injector blades (2A, 2B) serving for normal spreading, and at least one "auxiliary" blade (3) associated with one of said standard blades (2A) and serving for boundary spreading, the device being characterized by the fact that said auxiliary blade (3) is removable or retractable and is shorter than the standard blade (2A) with which it is associated, said auxiliary blade (3) being positionable in front of the associated standard blade so as to intercept all of the flow (F) of substance poured onto the disk (1) ahead of it, and throws the substance off the disk while preventing it from reaching the associated standard blade (2A).

2. A device according to claim 1, characterized by the fact that said auxiliary blade (3) possesses a cover-forming top portion (33) suitable for preventing substance from dropping between the auxiliary blade (3) and the associated standard blade (2A).

3. A device according to claim 1 or 2, characterized by the fact that each of the standard blades is associated with a respective auxiliary blade (3).

4. A device according to claim 1 or 2, characterized by the fact that the disk (1) is fitted with a pair of standard blades (2A, 2B) of different lengths and with a single auxiliary blade (3), which auxiliary blade is associated with the longer standard blade (2A).

5. A device according to claim 4, characterized by the fact that the shorter standard blade (2B) is steerable.

6. A device according to any one of claims 1 to 5, characterized by the fact that it has a set of removable auxiliary blades of different lengths that can be used selectively.
